# FASCICULE DE BREVET EUROPEEN

(11) **EP 3 083 901 B1**
(45) Date de publication et mention de la délivrance du brevet: **27.01.2021**
(21) Numéro de dépôt: 14814863.8
(22) Date de dépôt: 17.12.2014
(51) Int. Cl.: C08L 71/02, C09J 11/06, C08G 65/336, C08K 5/00, C09D 5/34

(54) **PLASTIFIANT POUR MASTICS, PLASTISOLS ET ADHESIFS**
WEICHMACHER FÜR KITTE, PLASTISOLE UND KLEBSTOFFE
PLASTICIZER FOR MASTICS, PLASTISOLS AND ADHESIVES

(30) Priorité: 20.12.2013 FR 1363235
(43) Date de publication de la demande: 26.10.2016
(73) Titulaire: Total Marketing Services, 92800 Puteaux (FR)
(72) Inventeur: BAUER, Thorsten, 49479 Ibbenbüren (DE); BARDIN, Franck, F-78240 Chambourcy (FR); WESTELYNCK, Antoine, 78440 Brueil en Vexin (FR)
(74) Mandataire: Hirsch & Associés
(86) Numéro de dépôt international: PCT/EP2014/078306
(87) Numéro de publication internationale: WO 2015/091694

(56) Documents cités:
- EP-A1- 2 361 949
- WO-A1-2007/006489
- WO-A1-2010/103244
- WO-A2-2010/103245

## Description

### DOMAINE DE L'INVENTION

L'invention concerne une composition de mastics, plastisols, ou adhésifs comprenant une coupe hydrocarbonée fonctionnalisée, en particulier hydroxylée.

La présente invention concerne aussi l'utilisation dudit plastifiant pour réduire le phénomène de ressuage dans les mastics, plastisols et adhésifs.

### CONTEXTE TECHNIQUE DE L'INVENTION

De nombreux produits sont utilisés dans les matériaux de construction, par exemple pour les revêtements de sol, les mastics ou encore les joints de sanitaires. L'ajout de plastifiants est courant dans certaines familles de mastics tels que les mastics hybrides (à base de polymères siliconés modifiés), les mastics acryliques, les mastics Polyuréthanes, les Plastisols (pâte PVC) et certains adhésifs. Un plastifiant est une molécule ou un oligomère, à l'état solide ou à l'état liquide plus ou moins visqueux, ajouté aux formulations de différents types de matériaux pour les rendre plus flexibles, plus résistants, plus résilients ou plus faciles à manipuler.

Un plastifiant idéal est compatible avec la matrice polymère pour éviter les phénomènes de migration, de ressuage, peu volatil, difficilement extractible par les liquides qui seront en contact avec le matériau plastifié, performant vis-à-vis de certaines propriétés comme la souplesse, résistant aux chocs, au froid, à la chaleur et ayant une bonne résistivité électrique. Il ne s'oxydera pas et sera non toxique, inodore, incolore et peu coûteux.

Les phtalates sont des produits très couramment utilisés comme plastifiant. Mais la pression réglementaire de plus en plus forte restreint leurs emplois dans de nombreux pays du fait de leur dangerosité pour l'homme. Des alternatives à leur utilisation sont donc aujourd'hui nécessaires et très recherchées.

D'autre part, les contraintes réglementaires récentes apportées par les limitations en Composés Organiques Volatiles ou COV (Volatil Organic Compounds en anglais ou VOC) dans les matériaux de construction sont également à prendre en compte. En effet, ces composés ont tendance soit tout de suite, soit avec le temps à s'évaporer et/ou se dégrader et à être une source d'émissions souvent toxiques pour l'environnement et plus particulièrement pour les santés humaine et animale. Ces émissions environnant la vie de tous les jours constituent une source importante de pollution intérieure des habitations, des bureaux et des administrations et de tout espace enfermé dont l'aération est limitée. Ces émissions peuvent être majeures au moment de la pose des matériaux mais il peut également y avoir un effet à plus long terme par volatilité rémanente en fonction du temps ou même liée à la dégradation progressive du revêtement ou de la composition adhésive ou du mastic.

Les fluides hydrocarbonés de type gazole, kérosène ou white spirit peuvent également être utilisés comme plastifiant secondaire dans différentes formulations incluant des polymères ou résines. C'est le cas pour les mastics ou les pâtes PVC.

Mais leur utilisation est aujourd'hui limitée par leur moindre compatibilité dans le polymère par rapport aux phtalates. Des phénomènes de migration en surface, de ressuage, des défauts d'aspect de surface constatés empêchent la production de formules sans phtalates contenant uniquement des fluides hydrocarbonés.

De par les contraintes réglementaires de plus en plus importantes, une solution technique est requise pour permettre le remplacement des phtalates dans des formulations stables et économiquement avantageuses de matériaux de construction à bas taux de COV.

Le document WO 2010/103245 décrit une coupe hydrocarbonée issue de la distillation de pétrole brut comme plastifiant de matériaux de construction, tels que des mastics à base de silicone, des adhésifs siliconés, des PVC.

Un des principaux objectifs de la demanderesse est donc de proposer un plastifiant exempt de phtalates, pour la formulation de matériaux de construction et de matériaux destinés au secteur automobile tels que les mastics, les plastisols ou certains types d'adhésifs.

Un autre des objectifs de la demanderesse est d'obtenir un plastifiant à caractère non COV, pour la formulation de matériaux de construction, de matériaux à base de résines ou de matériaux utilisés dans le secteur automobile tels que les mastics, les plastisols ou certains types d'adhésifs.

Un autre objectif de la demanderesse est de proposer un plastifiant permettant la formulation de mastics, plastisols et adhésifs présentant une résistance aux UV satisfaisantes.

Un autre objectif de la demanderesse est de proposer un plastifiant permettant la formulation de mastics, plastisols et adhésifs ayant un durcissement satisfaisant, notamment selon la norme DIN ISO 7619 (pour les mastics).

Un autre objectif de la demanderesse est de proposer un plastifiant permettant la formulation de mastics, plastisols et adhésifs ne présentant pas de ressuage.

Un autre objectif de la demanderesse est de proposer un plastifiant permettant la formulation de mastics, plastisols et adhésifs présentant un séchage satisfaisant, c'est-à-dire un séchage en moins de 24 heures pour un film d'une épaisseur de 2 mm.

Un autre objectif de la demanderesse est de proposer un plastifiant permettant la formulation de mastics, plastisols et adhésifs présentant une viscosité dynamique adéquate, c'est-à-dire une viscosité comprise entre 2000 et 8000 Pa.s. à 23°C (Rhéomètre Physica Rheolab - Aiguille Z4 - vitesse : 1 tour/mn).

Un autre objectif de la demanderesse est de proposer un plastifiant permettant la formulation de mastics, plastisols et adhésifs présentant un temps de formation de peau satisfaisant, c'est-à-dire un temps de formation de peau à température ambiante compris entre 5 et 60 minutes.

Un autre objectif de la demanderesse est de proposer un plastifiant permettant la formulation de mastics, plastisols et adhésifs présentant une bonne résistance au cisaillement selon la norme DIN EN 14293 (pour les mastics).

Un autre objectif de la demanderesse est de proposer un plastifiant permettant la formulation de mastics, plastisols et adhésifs présentant un module d'élasticité selon la norme DIN 53504 ou selon la norme DIN 52455-1 adéquate (pour les mastics).

Un autre objectif de la demanderesse est de proposer un plastifiant permettant la formulation de mastics, plastisols et adhésifs présentant une bonne résistance à la traction selon la norme DIN 53504 (pour les mastics).

Un autre objectif de la demanderesse est de proposer un plastifiant permettant la formulation de mastics, plastisols et adhésifs présentant un allongement à la rupture satisfaisant selon la norme DIN 53504 (pour les mastics).

Un autre objectif de la demanderesse est de proposer un plastifiant permettant la formulation de mastics, plastisols et adhésifs présentant une reprise élastique satisfaisante selon la norme DIN EN ISO 7389 (pour les mastics).

### RESUME DE L'INVENTION

Ces objectifs sont atteints grâce à un type de plastifiant. Il est décrit un plastifiant pour mastics, plastisols, et adhésifs comprenant au moins une coupe hydrocarbonée issue de la distillation de pétrole brut, caractérisée en ce que la coupe hydrocarbonée est fonctionnalisée par au moins un groupement comprenant un hétéroatome choisi parmi les atomes d'oxygène, soufre, phosphore et/ou azote.

De préférence, le plastifiant pour mastics, plastisols, et adhésifs comprend une coupe hydrocarbonée fonctionnalisée par au moins un groupement comprenant un atome d'oxygène.

De préférence, le plastifiant pour mastics, plastisols, et adhésifs comprend une coupe hydrocarbonée fonctionnalisée par au moins un groupement choisi parmi les groupements hydroxyles, esters, acides carboxyliques et/ou cétones.

De préférence la coupe hydrocarbonée fonctionnalisée comprend majoritairement des groupements hydroxyles.

De préférence la coupe hydrocarbonée fonctionnalisée comprend de 1 à 20 % en moles de groupements hydroxyles, préférentiellement de 5 à 10%.

De préférence, la coupe hydrocarbonée est une coupe hydrocarbonée hydrotraitée, hydrocraquée et/ou craquée catalytiquement, ou une coupe hydrocarbonée oléfinique.

De préférence, la coupe hydrocarbonée est une coupe hydrocarbonée désaromatisée et/ou désulfurée ou une coupe hydrocarbonée oléfinique.

De préférence, la coupe hydrocarbonée présente une température d'ébullition comprise entre 240 et 400 °C.

De préférence, la coupe hydrocarbonée présente une viscosité cinématique à 40°C comprise entre 1 et 22 mm²/s selon la norme ASTM D445.

De préférence, la coupe hydrocarbonée présente un point d'écoulement allant de -40 à +10 °C selon la norme ASTM D97.

De préférence, la coupe hydrocarbonée présente une teneur en composés aromatiques mesuré par spectroscopie UV, inférieure à 300 ppm, de préférence inférieure à 200 ppm.

De préférence, le plastifiant comprend moins de 1% en poids de phtalates par rapport au poids de plastifiant
L'invention a pour objet une composition de mastics, plastisols ou adhésifs comprenant:
- au moins un polymère choisi dans le groupe consistant en un polyéther comportant deux fonctions terminales de type silane, un polyuréthane comportant deux fonctions terminales de type silane ou un mélange de ceux-ci, un polychlorure de vinyle, un copolymère d'éthylène-acétate de vinyle, un polyéthylène, un polypropylène, un polyamide ;
- le plastifiant tel que décrit ci-dessus ;
- au moins un composé choisi dans le groupe consistant en un épaississant, une charge, un agent de réticulation, un catalyseur de réticulation et une résine tackifiante, ou un mélange de ceux-ci.

De préférence, la composition de mastics, plastisols, ou adhésifs comprend de 1 à 30% en masse de plastifiant, par rapport à la masse de composition de mastics, plastisols, ou adhésifs, préférentiellement de 2 à 20% et plus préférentiellement de 5 à 15%.

Selon un mode de réalisation, la composition est une composition de mastic comprenant:
- au moins un polymère choisi dans le groupe consistant en un polyéther comportant deux fonctions terminales de type silane, un polyuréthane comportant deux fonctions terminales de type silane, ou un mélange de ceux-ci ;
- le plastifiant tel que décrit ci-dessus ;
- et au moins un agent de réticulation.

Selon un mode de réalisation, la composition est une composition de plastisols comprenant:
- au moins un polymère choisi parmi le groupe consistant en un polychlorure de vinyle ou un éthylène-acétate de vinyle,
- le plastifiant tel que décrit ci-dessus,
- une charge.

Selon un mode de réalisation, la composition est une composition d'adhésif comprenant:
- au moins un polymère consistant en un polyéthylène, un polypropylène, un polyamide ou un polyuréthane,
- un copolymère d'éthylène acétate de vinyle,
- le plastifiant tel que décrit ci-dessus,
- une résine tackifiante.

L'invention concerne enfin l'utilisation du plastifiant tel que décrit ci-dessus pour réduire le phénomène de ressuage dans des mastics, plastisols ou adhésifs.

### DESCRIPTION DETAILLEE DE L'INVENTION

Le plastifiant selon l'invention comprend au moins une coupe hydrocarbonée. Cette coupe hydrocarbonée a la particularité d'être fonctionnalisée.

On entend par coupe hydrocarbonée fonctionnalisée selon l'invention, une coupe hydrocarbonée ayant été modifiée chimiquement par introduction d'hétéroatomes. L'introduction de ces hétéroatomes, confère au plastifiant selon l'invention des propriétés polaires ou génère des interactions électroniques susceptibles de créer des affinités avec la matrice polymère présente dans les mastics, plastisols ou adhésifs. Les interactions polaires et/ou électroniques permettent de réduire les phénomènes de ressuage.

Les hétéroatomes sont des atomes d'oxygène, de soufre, d'azote et/ou de phosphore, de préférence les hétéroatomes sont des atomes d'oxygène.

Lorsque les hétéroatomes sont des atomes d'oxygène, les groupements présents dans la coupe hydrocarbonée sont par exemple, des groupements hydroxyle, cétone, acide carboxylique et/ou ester. La coupe hydrocarbonée comprend un type de groupement ou plusieurs types de groupements en mélange.

De préférence, la coupe hydrocarbonée fonctionnalisée comprend majoritairement des fonctions hydroxyle, on pourra la qualifier de coupe hydrocarbonée hydroxylée. La coupe hydrocarbonée fonctionnalisée comprend de 1 à 20 % en moles de groupements hydroxyles, de préférence de 5 à 10%.

Selon un mode de réalisation de l'invention, ces fonctions hydroxyles sont par exemple introduites dans la coupe hydrocarbonée par réaction d'un agent oxydant tel que le *m*-CPBA (acide m-chloro-peroxybenzoique), l'oxone, l'hydroperoxyde, le t-butyl hydroperoxyde, en présence d'un catalyseur métallique, par exemple à base de nickel ou de fer.

L'oxydation conduit préférentiellement à la formation de fonctions hydroxyles sur la coupe hydrocarbonée, en limitant la formation de cétones et/ou de fonctions acides.

Selon un second mode de réalisation de l'invention, la fonctionnalisation de la coupe hydrocarbonée peut aussi être faite par oxydation d'une coupe hydrocarbonée particulière c'est-à-dire une coupe hydrocarbonée oléfinique. Une solution proposée est la transformation en diols d'oléfines internes ou terminales. Un procédé possible est une oxydation en milieu aqueux avec de l'eau oxygénée pour former un époxyde, puis un diol par hydrolyse.

Selon un troisième mode de réalisation de l'invention, la fonctionnalisation de la coupe hydrocarbonée peut également être faite par additivation des fonctions hydroxyles. Une solution proposée est le mélange entre la coupe hydrocarbonée et un alcool ramifié comprenant entre 14 et 22 atomes de carbones tels que les alcools de Guerbet comprenant 16 à 20 atomes de carbones (par exemple le 2-octyl-1-decanol) et les alcools ramifiés comprenant 14 à 15 atomes de carbones. Les alcools de Guerbet comme décrit dans la littérature sont des alcools ramifiés obtenus par dimérisation d'alcools aliphatiques avec libération d'une molécule d'eau.

Cette additivation des fonctions hydroxyles sur la coupe hydrocarbonée peut par exemple se faire par pesée puis mélange par agitation de 20 à 70 % pds d'alcool ramifiés et de 30 à 80% pds de coupe hydrocarbonée tels que décrits.

De préférence, le plastifiant selon l'invention comprend au moins une coupe hydrocarbonée fonctionnalisée telle que décrite ci-dessus, potentiellement en mélange avec une coupe hydrocarbonée non fonctionnalisée.

La coupe hydrocarbonée est constituée d'alcanes linéaires, ramifiées et/ ou cycliques, de préférence en C13 à C23. La coupe hydrocarbonée peut aussi être une coupe hydrocarbonée oléfinique, comprenant des alcènes linéaires, ramifiées et/ou cycliques, de préférence en C14-C22.

On entend par coupe hydrocarbonée au sens de l'invention, une coupe issue de la distillation du pétrole brut, de préférence issue de la distillation atmosphérique et/ou distillation sous vide du pétrole brut, de préférence issue de la distillation atmosphérique suivie de la distillation sous vide. La coupe hydrocarbonée selon l'invention est de préférence une coupe gazole.

La coupe hydrocarbonée selon l'invention est aussi de préférence soumise à des étapes d'hydrotraitement, hydrocraquage et/ou craquage catalytique.

La coupe hydrocarbonée selon l'invention peut aussi de préférence être soumise à une étape d'hydrodéparaffinage.

La coupe hydrocarbonée selon l'invention est aussi de préférence soumise à des étapes de désaromatisation et/ou éventuellement désulfuration.

La coupe hydrocarbonée peut être un mélange de coupes hydrocarbonées subissant les étapes décrites ci-dessus.

La coupe hydrocarbonée telle que décrite ci-dessus, présente un intervalle de distillation ID (en °C) tel que 240≤ ID ≤ 400 et plus préférentiellement tel que 240 ≤ ID ≤ 370. La coupe hydrocarbonée peut comprendre une ou plusieurs fractions d'intervalles de distillation compris dans celui de ladite coupe.

La coupe hydrocarbonée de type gazole selon l'invention comprend généralement plus de 50% en poids de composés paraffiniques, de préférence plus de 60%, encore plus préférentiellement plus de 65%.

La coupe hydrocarbonée selon l'invention est généralement constituée d'une majorité d'isoparaffines et d'une minorité de normales paraffines. De préférence la coupe hydrocarbonée contient plus de 50% en poids d'isoparaffines et moins de 20% en poids de normales paraffines.

La coupe hydrocarbonée selon l'invention comprend généralement moins de 50% en poids de composés naphténiques, de préférence moins de 45%, encore plus préférentiellement moins de 40%.

La coupe hydrocarbonée selon l'invention est de préférence exempte d'aromatiques. Par exempte, on entend, une coupe hydrocarbonée comprenant moins de 300 ppm d'aromatiques, de préférence moins de 200 ppm par spectrométrie UV.

De préférence, la coupe hydrocarbonée selon l'invention a une teneur en soufre inférieure à 10 ppm et préférentiellement inférieure à 2 ppm.

La coupe hydrocarbonée selon l'invention a généralement une viscosité cinématique à 40°C comprise entre 1 et 22 mm²/s, de préférence entre 2 et 15 mm²/s et de manière plus préférentielle entre 2 et 13 mm²/s selon la norme ASTM D445.

La coupe hydrocarbonée selon l'invention a un point d'écoulement selon la norme ASTM D97 compris entre -40 et +10°C, de préférence compris entre -30 et 0 °C, encore plus préférentiellement compris entre -20 et 0°C.

La coupe hydrocarbonée selon l'invention a par ailleurs l'avantage d'être facilement disponible sur le marché, d'être relativement économique au sein de la chaîne des produits de la distillation pétrolière.

Le plastifiant selon l'invention est exempt de composés de type phtalate. Par exempt selon l'invention, on entend un plastifiant comprenant moins de 1% en masse de phtalates, par rapport à la masse de plastifiant, de préférence moins de 0,5%, plus préférentiellement moins de 0,1%, encore plus préférentiellement moins de 0,01%.

Le plastifiant selon l'invention a généralement une viscosité cinématique à 40°C comprise entre 5 à 22 mm²/s, de préférence entre 5 à 15 mm²/s selon la norme ASTM D445.

L'invention concerne aussi les compositions de mastics, plastisols, adhésifs comprenant le plastifiant décrit ci-dessus.

L'invention concerne également une composition de mastic comprenant au moins un polymère choisi dans le groupe consistant en un polyéther comportant deux fonctions terminales de type silane, un polyuréthane comportant deux fonctions terminales de type silane, ou un mélange de ceux-ci, la composition de plastifiant telle que décrite ci-dessus et au moins un agent de réticulation.

De préférence, le polymère est un polyéther comportant deux fonctions terminales de type silane.

Avantageusement la composition de mastic comprend de 10 à 50 % en poids dudit polymère, de préférence de 20 à 30 %.

Avantageusement la composition de mastic comprend de 10 à 30 % en poids de ladite composition de plastifiant, de préférence de 10 à 25 %.

De manière à satisfaire aux exigences mécaniques et physico-chimiques, la composition de mastic comprend également de manière classique au moins un composé choisi dans le groupe consistant en un épaississant, une charge, un agent de réticulation et/ou un catalyseur.

L'invention concerne en outre une composition de plastisols comprenant au moins un polymère choisi dans le groupe consistant en un polychlorure de vinyle et l'éthylène-acétate de vinyle ou EVA, avec la composition de plastifiant telle que décrite ci-dessus et une charge.

L'invention a aussi pour objet une composition d'adhésif, de préférence une composition d'adhésif thermoplastique, comprenant au moins un polymère consistant en un polyéthylène, un polypropylène ou un polyamide, un copolymère d'éthylène acétate de vinyle, la composition de plastifiant telle que décrite ci-dessus et une résine tackifiante.

Les compositions de mastics, de plastisols et d'adhésifs selon l'invention comprennent de 1 à 30% en masse de plastifiant, par rapport à la masse de la composition, de préférence de 2 à 20%, plus préférentiellement de 5 à 15%.

Les compositions de mastics, de plastisols et d'adhésifs selon l'invention ont la caractéristique remarquable de contenir moins de 0,1% en poids de phtalates, par rapport à la masse de la composition, de préférence moins de 0,05%, plus préférentiellement moins de 0,01%, encore plus préférentiellement moins de 0,001%.

Les compositions de mastics, de plastisols et d'adhésifs thermoplastique telles que décrites sont sans phtalates et à bas taux de COV afin de satisfaire aux exigences réglementaires en vigueur.

### EXEMPLES

Dans la suite de la présente description, des exemples sont donnés à titre illustratif de la présente invention et ne visent en aucun cas à en limiter la portée.

Différentes formulations de mastic hybride à base de polymères siliconés modifiés (en anglais Silyl Modified Polymer ou SMP) ont été évaluées. Ces mastics SMP incluent les familles de produits ST-PE (Silane terminated Polyether) et ST-PU (Silane terminated Poyurethane).

Les exemples suivants décrivent les compositions de mastics SMP comprenant les différents plastifiants ci-dessous:
- du di-isodécyl phthalate (ou DIDP) comme référence pour les phtalates, dans l'exemple 1 comparatif,
- une coupe hydrocarbonée hydrocraquée fonctionnalisée, en particulier une coupe hydrocarbonée hydrocraquée hydroxylée, en particulier une coupe HYDROSEAL G3H hydroxylée, dans l'exemple 2 selon l'invention,
- une coupe hydrocarbonée hydrodewaxée, en particulier une coupe HYDROSEAL G340H, dans l'exemple 3 comparatif,
- du di-2-propyl-heptyl phtalate (ou DPHP) comme seconde référence phtalates, dans l'exemple comparatif 3

La coupe hydrocarbonée HYDROSEAL G3H est hydroxylée de la façon suivante :

### Préparation du catalyseur :

Dans 1,25 L d'acétonitrile sous atmosphère inerte, sont ajoutés 417 mg d'acétate de fer (II) et 697 mg de 2-méthyl pyridine. Le mélange est agité pendant 1 heure puis 821 mg de tétraphényle borate de sodium est ajouté. Après 1 heure de mélange, la solution de catalyseur peut être utilisée pour la réaction d'hydroxylation.

### Hydroxylation de la coupe hydrocarbonée HYDROSEAL G3H :

2,5 kg de coupe hydrocarbonée HYDROSEAL G3H, la solution de catalyseur et 3,75 L de dichlorométhane sont ajoutés dans un réacteur. Le mélange est chauffé autour de 37°C, puis 1,15 kg d'acide m-chloro-peroxybenzoique (à 70%) dissout dans 2,6 L de dichlorométhane et 0,9 L d'acétonitrile sont ajoutés lentement sur une période de 40 minutes. Le mélange est encore effectué pendant 1 heure à 40°C et ensuite 0,013 équivalent de la solution de catalyseur est ajouté diluée dans 200 mL de dichlorométhane et 0,9 L d'acétonitrile. 1,15 kg d'acide m-chloro-peroxybenzoique (à 70%) dissout dans 2,6 L de dichlorométhane et 0,9 L d'acétonitrile sont ajoutés lentement sur une période de 40 minutes. Le mélange est encore effectué pendant 4 heures à 40°C, puis refroidi à 25°C et mélangé pendant 24 heures. Le mélange est ensuite refroidi à 5°C et neutralisé avec une solution 2 M de carbonate de sodium. Après mélange 15 minutes, la solution aqueuse est extraite. La phase organique est encore lavée avec 5,5 L de carbonate de sodium et mélangé pendant 30 minutes. Après extraction de la phase aqueuse, la phase organique est lavée 3 fois avec 2,5 L d'eau et concentrée sous vide. Ensuite on fait 2 lavages avec 4 L d'acide chlorhydrique 2 M. Après extraction de la phase aqueuse, la phase organique est lavée 4 L d'hydroxyde de sodium et 3 L de NaCl, puis concentrée sous vide pour fournir 2,2 kg de coupe hydrocarbonée hydroxylée, avec une quantité d'alcool de 24 % molaire (détermination par silylation de la coupe hydrocarbonée hydroxylée en présence de pyridine et chlorure de triméthylsilyle puis analyse ¹H RMN).

Le tableau 1 regroupe les caractéristiques chimiques de mastics ST-PE et ST-PU utilisés pour les différentes évaluations.

La formulation de l'exemple 1 contient 17% en masse d'un plastifiant phtalate qui est le Jayflex DIDP, par rapport à la masse de la formulation. La formulation de l'exemple 2 contient 17% en masse d'un plastifiant qui est une coupe Hydroseal G3H hydroxylée, par rapport à la masse de la formulation.

**Tableau 1 : caractéristiques chimiques**

| | | Exemple 1 comparatif | Exemple 2 selon l'invention | Exemple 3 comparatif |
|---|---|---|---|---|
| | Nature chimique / Propriétés | composition (en % massique) | composition (en % massique) | composition (en % massique) |
| Polymère MS 203H | Polyéther à fonctions terminales de type silane / Polymère | 15 | 15 | - |
| Polymère MS 303H | Polyéther à fonctions terminales de type silane / Polymère | 10 | 10 | - |
| Polymère ST-PU ST-61 | Polyuréthane à fonctions terminales de type silane / Polymère | - | - | 24,5 |
| Irganox 1076 | anti-oxydant phénolique à encombrement stérique | 0,2 | 0,2 | - |
| Jayflex DIDP | Di-isodecyl phthalate / Plastifiant | 17 | - | - |
| DPHP | Di 2-propyl heptyl phtalate / plastifiant | - | - | 8 |
| DEV 1641-2 | Hydroseal G3H hydroxylée / Plastifiant | - | 17 | - |
| Hydroseal HDW | Hydroseal G340H hydrodewaxé (HDW) | - | - | 7 |
| Crayvallac SLX | PA-wax / épaississant | 5,5 | 5,5 | 1 |
| - | Silice amorphe / Agent réologique | - | - | 1 |
| Carbital 110S | Chalk / charge | 49,9 | 49,9 | - |
| - | Carbonate de calcium / charge | - | - | 56 |
| Dynasilan VTMO | Vinyltrimethoxysilan / agent séchant | 0,8 | 0,8 | - |
| - | Dérivé silane / agent séchant | - | - | 1,8 |
| Dynasilan AMMO | 3-Aminopropylmethoxysilane / agent de réticulation | 1,1 | 1,1 | - |
| - | Organo silane / Agent de réticulation | - | - | 1,5 |
| Tegokat 223 | Dioctyltindiethanolate / Catalyseur | 0,3 | 0,3 | - |
| Tegokat 422 | Dioctyltin-silane-blend / Catalyseur | 0,2 | 0,2 | - |
| - | Etain organique / Catalyseur | | - | 0,2 |
| | TOTAL | 100 | 100 | 100 |

Le tableau 2 regroupe les résultats obtenus pour les différentes formulations.

**Tableau 2 : Propriétés mécaniques**

| | Exemple 1 comparatif | Exemple 2 selon l'invention | Exemple 3 comparatif |
|---|---|---|---|
| Caractéristiques | DIDP | DEV 1641-2 | Hydroseal HDW/DPHP |
| Ressuage | Non | Non | Oui |
| Viscosité après 0 jour / 56 jours (en Pa.s) (Méthode interne) | 6150 / 4800 | 4650 / 3450 | - |
| Temps de formation de la peau (temps de lissage) après 0 jour / 56 jours (en min) (Méthode interne) | 8/10 | 49/55 | - |
| Dureté Shore A après 28 jours à température ambiante (DIN ISO 7619) | 28 | 24 | - |
| Résistance au cisaillement (application du mastic sur un substrat en bois) EN 281 après 3 jours (en N/mm²) (DIN EN 14293) | 0,795 | 0,496 | - |
| Résistance au cisaillement (application du mastic sur un substrat en bois) EN 281 après 3 jours (en mm) (DIN EN 14293) | 2,0 | 0,9 | - |
| Module d'élasticité à 100% (film de 2mm) 3 jours / 28 jours (en N/mm²) (DIN 53504, S2) | 0,44 / 0,46 | 0,23 / 0,31 | - |
| Résistance à la traction (film de 2 mm) 3 jours / 28 jours (en N/mm²) (DIN 53504, S2) | 1,13 / 1,16 | 0,73 / 0.98 | - |
| Allongement à la rupture à 3 jours / 28 jours (en %) (DIN 53504, S2) | 1150 / 1150 | 1150 / 1100 | - |
| Module d'élasticité à 100% (béton cycle A) à température ambiante (en N/mm²) (DIN 52455-1) | 0,536 | 0,390 | - |
| Module d'élasticité à 100% (aluminium cycle A) à température ambiante (en N/mm²) (DIN 52455-1) | 0,518 | 0,398 | - |
| Mode d'élasticité à 100% (Béton cycle B) à température ambiante (en N/mm²) (DIN 52455-1) | 0,461 | 0,624 | - |
| Module d'élasticité à 100% (Béton cycle B) à -20°C (en N/mm²) (DIN 52455-1) | 0,513 | 0,720 | - |
| Module d'élasticité à 100% (Aluminium cycle B) à température ambiante (en N/mm²) (DIN 52455-1) | 0,511 | 0,522 | - |
| Reprise élastique à température ambiante (en %) (DIN EN ISO 7389-B) | 64 | 68 | - |

Les résultats montrent qu'il est impossible de remplacer 100% des phtalates par une coupe hydrocarbonée hydrodewaxée. En effet, un ressuage est observé à partir d'une intégration de 7% d'hydroseal G340H en mélange avec des phtalates de types DPHP. Les propriétés mécaniques du mastics ST-PU n'ont donc pas été évaluées.

On remarque au contraire que les propriétés mécaniques du mastic ST-PE contenant la composition d'Hydroseal G3H fonctionnalisé en tant que plastifiant sont au moins aussi bonnes, voire meilleures que celles d'un mastic contenant du DIDP en tant que plastifiant notamment pour le ressuage et la reprise élastique (selon la norme DIN EN ISO 7389-B).

## Revendications

1. Composition de mastics, plastisols, ou adhésifs comprenant :
- au moins un polymère choisi dans le groupe consistant en un polyéther comportant deux fonctions terminales de type silane, un polyuréthane comportant deux fonctions terminales de type silane, un polychlorure de vinyle, un copolymère d'éthylène-acétate de vinyle, un polyéthylène, un polypropylène, un polyamide, ou un mélange de ceux-ci ;
- un plastifiant comprenant au moins une coupe hydrocarbonée issue de la distillation de pétrole brut, ladite coupe hydrocarbonée ayant été modifiée chimiquement par l'introduction d'hétéroatomes choisis dans le groupe consistant en l'oxygène, le soufre, l'azote et le phosphore;
- au moins un composé choisi dans le groupe consistant en un épaississant, une charge, un agent de réticulation, un catalyseur de réticulation et une résine tackifiante, ou un mélange de ceux-ci.

2. Composition de mastics, plastisols, ou adhésifs selon la revendication 1 **caractérisée en ce qu'**elle comprend de 1 à 30% en masse de plastifiant, par rapport à la masse de composition de mastics, plastisols, ou adhésifs, de préférence de 2 à 20%, plus préférentiellement de 5 à 15%.

3. Composition selon la revendication 1 ou 2, qui est une composition de mastic comprenant :
- au moins un polymère choisi dans le groupe consistant en un polyéther comportant deux fonctions terminales de type silane, un polyuréthane comportant deux fonctions terminales de type silane, ou un mélange de ceux-ci ;
- le plastifiant;
- et au moins un agent de réticulation.

4. Composition selon la revendication 1 ou 2, qui est une composition de plastisols comprenant :
- au moins un polymère choisi parmi le groupe consistant en un polychlorure de vinyle ou un copolymère éthylène-acétate de vinyle ;
- le plastifiant;
- une charge.

5. Composition selon la revendication 1 ou 2, qui est une composition d'adhésif comprenant :
- au moins un polymère consistant en un polyéthylène, un polypropylène, un polyamide ou un polyuréthane ;
- un copolymère d'éthylène acétate de vinyle ;
- le plastifiant;
- une résine tackifiante.

6. Composition selon l'une des revendications 1 à 5, **caractérisée en ce que** la coupe hydrocarbonée a été modifiée chimiquement par l'introduction d'au moins un groupement comprenant un atome d'oxygène.

7. Composition selon l'une des revendications 1 à 6, **caractérisée en ce que** la coupe hydrocarbonée a été modifiée chimiquement par l'introduction d'au moins un groupement choisi parmi les groupements hydroxyles, esters, acides carboxyliques et/ou cétones.

8. Composition selon l'une des revendications 1 à 7, **caractérisée en ce que** la coupe hydrocarbonée comprend majoritairement des groupements hydroxyles.

9. Composition selon l'une des revendications 1 à 8, **caractérisée en ce que** la coupe hydrocarbonée comprend de 1 à 20 % en moles de groupements hydroxyles, de préférence de 5 à 10%.

10. Composition selon l'une des revendications 1 à 9, **caractérisée en ce que** la coupe hydrocarbonée est une coupe hydrocarbonée hydrotraitée, hydrocraquée et/ou craquée catalytiquement ou une coupe hydrocarbonée oléfinique.

11. Composition selon l'une des revendications 1 à 10, **caractérisée en ce que** la coupe hydrocarbonée est une coupe hydrocarbonée désaromatisée et/ou désulfurée ou une coupe hydrocarbonée oléfinique.

12. Composition selon l'une des revendications 1 à 11, **caractérisée en ce que** la coupe hydrocarbonée présente une température d'ébullition comprise entre 240 et 400 °C.

13. Composition selon l'une des revendications 1 à 12, **caractérisée en ce que** la coupe hydrocarbonée présente une teneur en composés aromatiques mesurée par spectroscopie UV inférieure à 300 ppm, de préférence inférieure à 200 ppm.

14. Composition selon l'une des revendications 1 à 13, **caractérisée en ce que** le plastifiant comprend moins de 1% en poids de phtalates, par rapport au poids de plastifiant.

15. Utilisation d'un plastifiant pour réduire le phénomène de ressuage dans des mastics, plastisols ou adhésifs, le plastifiant comprenant au moins une coupe hydrocarbonée issue de la distillation de pétrole brut, ladite coupe hydrocarbonée ayant été modifiée chimiquement par l'introduction d'hétéroatomes choisis dans le groupe consistant en l'oxygène, le soufre, l'azote et le phosphore.

## Patentansprüche

1. Zusammensetzung von Kitten, Plastisolen oder Klebstoffen, umfassend:
- mindestens ein Polymer, ausgewählt in der Gruppe, bestehend aus einem Polyether, umfassend zwei Endgruppen des Typs Silan, einem Polyurethan, umfassend zwei Endgruppen des Typs Silan, einem Polyvinylchlorid, einem Ethylen-Vinylacetat-Copolymer, einem Polyethylen, einem Polypropylen, einem Polyamid oder einer Mischung aus diesen;
- einen Weichmacher, umfassend mindestens eine Kohlenwasserstofffraktion aus der Destillation von Rohöl, wobei die Kohlenwasserstofffraktion durch die Einführung von Heteroatomen, ausgewählt in der Gruppe, bestehend aus Sauerstoff, Schwefel, Stickstoff und Phosphor, chemisch modifiziert wurde;
- mindestens eine Verbindung, ausgewählt in der Gruppe, bestehend aus einem Verdickungsmittel, einem Füllstoff, einem Vernetzungsmittel, einem Vernetzungskatalysator und einem klebrigmachenden Harz oder einer Mischung aus diesen.

2. Zusammensetzung von Kitten, Plastisolen oder Klebstoffen nach Anspruch 1, **dadurch gekennzeichnet, dass** sie 1 bis 30 Massen-% eines Weichmachers bezogen auf die Masse einer Zusammensetzung von Kitten, Plastisolen oder Klebstoffen, vorzugsweise 2 bis 20 %, bevorzugter 5 bis 15 % umfasst.

3. Zusammensetzung nach Anspruch 1 oder 2, die eine Kitt-Zusammensetzung ist, umfassend:
- mindestens ein Polymer, ausgewählt in der Gruppe, bestehend aus einem Polyether, umfassend zwei Endgruppen des Typs Silan, einem Polyurethan, umfassend zwei Endgruppen des Typs Silan, oder einer Mischung aus diesen;
- den Weichmacher;
- und mindestens ein Vernetzungsmittel.

4. Zusammensetzung nach Anspruch 1 oder 2, die eine Plastisol-Zusammensetzung ist, umfassend:
- mindestens ein Polymer, ausgewählt in der Gruppe, bestehend aus einem Polyvinylchlorid oder einem Ethylen-Vinylacetat-Copolymer;
- den Weichmacher;
- einen Füllstoff.

5. Zusammensetzung nach Anspruch 1 oder 2, die eine Klebstoff-Zusammensetzung ist, umfassend:
- mindestens ein Polymer, bestehend aus einem Polyethylen, einem Polypropylen, einem Polyamid oder einem Polyurethan;
- ein Ethylen-Vinylacetat-Copolymer;
- den Weichmacher;
- ein klebrigmachendes Harz.

6. Zusammensetzung nach einem der Ansprüche 1 bis 5, **dadurch gekennzeichnet, dass** die Kohlenwasserstofffraktion durch die Einführung mindestens einer Gruppierung, umfassend ein Sauerstoffatom, chemisch modifiziert wurde.

7. Zusammensetzung nach einem der Ansprüche 1 bis 6, **dadurch gekennzeichnet, dass** die Kohlenwasserstofffraktion durch die Einführung mindestens einer Gruppierung, ausgewählt unter den Hydroxyl-Gruppierungen, Estern, Carboxylsäuren und/oder Ketonen, chemisch modifiziert wurde.

8. Zusammensetzung nach einem der Ansprüche 1 bis 7, **dadurch gekennzeichnet, dass** die Kohlenwasserstofffraktion mehrheitlich Hydroxyl-Gruppierungen umfasst.

9. Zusammensetzung nach einem der Ansprüche 1 bis 8, **dadurch gekennzeichnet, dass** die Kohlenwasserstofffraktion 1 bis 20 Mol-% Hydroxyl-Gruppierungen, vorzugsweise 5 bis 10 % umfasst.

10. Zusammensetzung nach einem der Ansprüche 1 bis 9, **dadurch gekennzeichnet, dass** die Kohlenwasserstofffraktion eine wasserstoffbehandelte, hydrogecrackte und/oder katalytisch gecrackte Kohlenwasserstofffraktion oder eine olefinische Kohlenwasserstofffraktion ist.

11. Zusammensetzung nach einem der Ansprüche 1 bis 10, **dadurch gekennzeichnet, dass** die Kohlenwasserstofffraktion eine entaromatisierte und/oder entschwefelte Kohlenwasserstofffraktion oder eine olefinische Kohlenwasserstofffraktion ist.

12. Zusammensetzung nach einem der Ansprüche 1 bis 11, **dadurch gekennzeichnet, dass** die Kohlenwasserstofffraktion eine Siedetemperatur zwischen 240 und 400 °c aufweist.

13. Zusammensetzung nach einem der Ansprüche 1 bis 12, **dadurch gekennzeichnet, dass** die Kohlenwasserstofffraktion einen Gehalt an aromatischen Verbindungen, gemessen durch UV-Spektroskopie, unter 300 ppm, vorzugsweise unter 200 ppm aufweist.

14. Zusammensetzung nach einem der Ansprüche 1 bis 13, **dadurch gekennzeichnet, dass** der Weichmacher weniger als 1 Gew.-% Phthalate bezogen auf das Gewicht des Weichmachers umfasst.

15. Verwendung eines Weichmachers, um das Phänomen eines Entmischens in Kitten, Plastisolen oder Klebstoffen zu verringern, wobei der Weichmacher mindestens eine Kohlenwasserstofffraktion umfasst, die aus der Destillation von Rohöl stammt, wobei die Kohlenwasserstofffraktion durch die Einführung von Heteroatomen, ausgewählt in der Gruppe, bestehend aus Sauerstoff, Schwefel, Stickstoff und Phosphor, chemisch modifiziert wurde.

## Claims

1. Composition of mastics, plastisols, or adhesives comprising:
- at least one polymer selected from the group consisting of a polyether comprising two silane-type terminal functions, a polyurethane comprising two silane-type terminal functions, a polyvinyl chloride, an ethylene-vinyl acetate copolymer, a polyethylene, a polypropylene, a polyamide, or a mixture thereof;
- a plasticizer comprising at least one hydrocarbon-containing cut originating from the distillation of crude oil, said hydrocarbon-containing cut having been chemically modified by the introduction of heteroatoms, selected from the group comprising oxygen, sulphur, nitrogen and phosphorus;
- at least one compound selected from the group consisting of a thickener, a filler, a cross-linking agent, a cross-linking catalyst and a tackifier resin, or a mixture thereof.

2. Composition of mastics, plastisols, or adhesives according to claim 1 **characterized in that** it comprises from 1 to 30% by mass of plasticizer, with respect to the mass of the composition of mastics, plastisols, or adhesives, preferably from 2 to 20%, more preferably from 5 to 15%.

3. Composition according to claim 1 or 1, which is a mastic composition comprising:
- at least one polymer selected from the group consisting of a polyether comprising two silane-type terminal functions, a polyurethane comprising two silane-type terminal functions or a mixture thereof;
- the plasticizer,
- and at least one cross-linking agent.

4. Composition according to claim 1 or 2, which is a composition of plastisols comprising:
- at least one polymer selected from the group consisting of a polyvinyl chloride or an ethylene-vinyl acetate copolymer;
- the plasticizer;
- a filler.

5. Composition according to claim 1 or 2, which is a composition of adhesive comprising:
- at least one polymer consisting of a polyethylene, a polypropylene, a polyamide or a polyurethane;
- an ethylene-vinyl acetate copolymer;
- the plasticizer;
- a tackifier resin.

6. Composition according to one of claims 1 to 5, **characterized in that** the hydrocarbon-containing cut that has been chemically modified by the introduction of at least one group comprising an oxygen atom.

7. Composition according to one of claims 1 to 6, **characterized in that** the hydrocarbon-containing cut that has been chemically modified by the introduction of at least one group selected from the hydroxyl, ester, carboxylic acid and/or ketone groups.

8. Composition according to one of claims 1 to 7, **characterized in that** the hydrocarbon-containing cut comprises a majority of hydroxyl groups.

9. Composition according to one of claims 1 to 8, **characterized in that** the hydrocarbon-containing cut comprises from 1 to 20 mole % of hydroxyl groups, preferably from 5 to 10%.

10. Composition according to one of claims 1 to 9, **characterized in that** the hydrocarbon-containing cut is a hydrotreated, hydrocracked and/or catalytically cracked hydrocarbon-containing cut or an olefinic hydrocarbon-containing cut.

11. Composition according to one of claims 1 to 10, **characterized in that** the hydrocarbon-containing cut is a de-aromatized and/or desulphurized hydrocarbon-containing cut or an olefinic hydrocarbon-containing cut.

12. Composition according to one of claims 1 to 11, **characterized in that** the hydrocarbon-containing cut has a boiling point comprised between 240 and 400°C.

13. Composition according to one of claims 1 to 12, **characterized in that** the hydrocarbon-containing cut has a content of aromatic compounds measured by UV spectroscopy less than 300 ppm, preferably less than 200 ppm.

14. Composition according to one of claims 1 to 13, **characterized in that** the plasticizer comprises less than 1% by weight of phthalates with respect to the weight of plasticizer.

15. Use of the plasticizer for reducing the phenomenon of bleeding in mastics, plastisols or adhesives, the plasticizer comprising at least one hydrocarbon-containing cut originating from the distillation of crude oil, said hydrocarbon-containing cut having been chemically modified by the introduction of heteroatoms, selected from the group comprising oxygen, sulphur, nitrogen and phosphorus
